# EUROPÄISCHE PATENTSCHRIFT

(11) **EP 3 740 605 B1**
(45) Veröffentlichungstag und Bekanntmachung des Hinweises auf die Patenterteilung: **07.06.2023**
(21) Anmeldenummer: 19700304.9
(22) Anmeldetag: 14.01.2019
(51) Int. Cl.: D01F 2/00, D01F 13/02

(54) **VERFAHREN ZUM WIEDERVERWERTEN VON CELLULOSE AUFWEISENDEM TEXTILMATERIAL**
METHOD FOR THE RECYCLING OF TEXTILE MATERIAL CONTAINING CELLULOSE
PROCÉDÉ DE RECYCLAGE DU MATÉRIAU TEXTILE COMPRENANT DE LA CELLULOSE

(30) Priorität: 15.01.2018 EP 18151697
(43) Veröffentlichungstag der Anmeldung: 25.11.2020
(73) Patentinhaber: LENZING AKTIENGESELLSCHAFT, 4860 Lenzing (AT)
(72) Erfinder: KLAUS-NIETROST, Christoph, 4840 Vöcklabruck (AT); HERCHL, Richard, 4910 Ried im Innkreis (AT); WEILACH, Christian, 4840 Vöcklabruck (AT)
(74) Vertreter: Dilg, Haeusler, Schindelmann Patentanwaltsgesellschaft mbH
(86) Internationale Anmeldenummer: PCT/EP2019/050757
(87) Internationale Veröffentlichungsnummer: WO 2019/138098

(56) Entgegenhaltungen:
- WO-A1-2015/077807
- WO-A1-2017/019802

## Beschreibung

Die Erfindung betrifft ein Verfahren zum Wiederverwerten bzw. Recyceln von Cellulose aufweisendem Textilmaterial.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Herkömmlich wird somit sowohl im Lyocell-Verfahren als auch im Viskoseverfahren vorwiegend der Rohstoff Holz bzw. daraus hergestellter Zellstoff eingesetzt. eingesetzt.

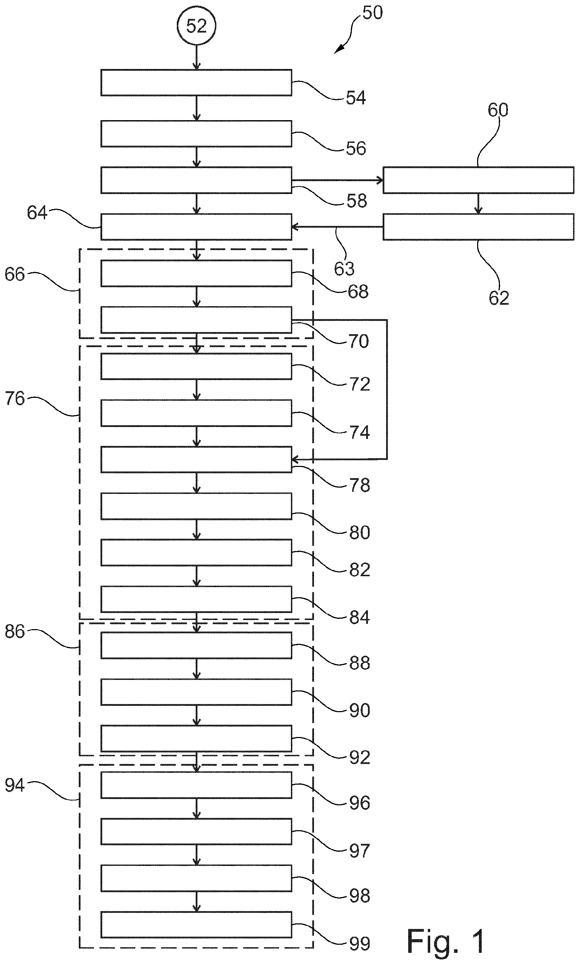

WO 2017/019802 A1 offenbart ein Verfahren und ein System zum Verarbeiten von gemischtem Textilien-Ausgangsmaterial, Isolieren von (Cellulose und Polyester) Molekülen, und Regenerieren von Cellulosefasern und Polyesterfasern. Wie aus Figur 1 ersichtlich, wird ein Gemisch aus Textilien (z.B. Altkleider), nach einer Vorbehandlung, getrennt in Baumwoll-Mischungen und Polyester-Mischungen.

Es ist eine Aufgabe der vorliegenden Erfindung, in effizienter Weise Cellulose aufweisende Formkörper nachhaltig und umweltfreundlich herzustellen.

Diese Aufgabe wird durch den Gegenstand gemäß dem unabhängigen Patentanspruch gelöst. Bevorzugte Ausgestaltungen ergeben sich aus den abhängigen Patentansprüchen.

Gemäß einem Ausführungsbeispiel der vorliegenden Erfindung ist ein Verfahren zum Wiederverwerten (oder Recyceln) von Cellulose aufweisendem Textilmaterial zum Herstellen von (insbesondere aus Cellulose bestehenden) regenerierten cellulosischen Formkörpern geschaffen, wobei bei dem Verfahren das Textilmaterial zerkleinert wird, zumindest ein Teil von nicht-Faserbestandteilen des zerkleinerten Textilmaterials von Faserbestandteilen des zerkleinerten Textilmaterials abgetrennt wird, zumindest ein Teil von nicht-cellulosischen Fasern der Faserbestandteile von cellulosischen Fasern der Faserbestandteile mechanisch abgetrennt wird, zumindest ein weiterer Teil der nicht-cellulosischen Fasern von den cellulosischen Fasern chemisch abgetrennt wird, und die Formkörper basierend auf den cellulosischen Fasern nach dem mechanischen Abtrennen und dem chemischen Abtrennen erzeugt werden.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung können unter dem Begriff "Textilmaterial" insbesondere textile Rohstoffe, daraus hergestellte textile Gebilde sowie wiederum daraus hergestellte Fertigfabrikate bzw. Produkte verstanden werden. Textile Rohstoffe können insbesondere Naturfasern und/oder Chemiefasern sein, insbesondere aufweisend oder bestehend aus Cellulose. In Textilmaterial können zusätzlich auch nichttextile Rohstoffe enthalten sein, die durch verschiedene Verfahren zu linien-, flächenförmigen und räumlichen Gebilden verarbeitet werden können. Aus den Rohstoffen können also insbesondere linienförmige textile Gebilde (wie zum Beispiel Garne oder Zwirne), flächenförmige textile Gebilde (wie zum Beispiel Gewebe, Geflechte, Vliesstoffe und Filze) und räumliche textile Gebilde (beispielsweise textile Schläuche, Strümpfe oder textile Halbzeuge) hergestellt werden. Textile Materialien in Form von Produkten oder Fertigfabrikaten können unter Verwendung der vorher genannten Erzeugnisse einem Weiterverarbeiter oder Verbraucher bereitgestellt werden.

Im Rahmen dieser Anmeldung kann unter dem Begriff "mechanisches Abtrennen" insbesondere mindestens eine Separationsprozedur verstanden werden, bei der ein Trennen von Mischungen unterschiedlicher Eigenschaften voneinander oder aus einem Trägermedium heraus erfolgt. Mögliche mechanische Trennverfahren für Stoffe aus einem Trägermedium können Filtrieren, Sedimentieren und das Trennen in einem Fliehkraftabscheider sein. Mögliche Verfahren zur Trennung von Stoffen mit unterschiedlichen Eigenschaften können das Flotieren, das Sieben, eine Trennung nach Dichte oder anderen Eigenschaften, wie Magnetismus, Leitfähigkeit, Oberfläche, etc., sein.

Im Rahmen dieser Anmeldung kann unter dem Begriff "chemisches Abtrennen" insbesondere mindestens eine Separationsprozedur verstanden werden, die sich einen chemischen Trennmechanismus zu Nutze macht, bei dem mindestens eine der zu trennenden Spezies während der Trennung chemisch in einen anderen Stoff umgewandelt werden kann. Insbesondere kann bei einer chemischen Trennung eine Spezies (zum Beispiel nicht-cellulosische Fasern) selektiv gegenüber einer anderen Spezies (zum Beispiel cellulosische Fasern) abgebaut werden. Bei chemischen Trennverfahren können also Stoffe oder Verbindungen mithilfe von chemischen Eigenschaften und von chemischen Reaktionen getrennt werden. Beispiele für chemische Trennverfahren sind Trennung aufgrund unterschiedlicher Löslichkeit, Trennung aufgrund des chemischen Aufbaus, etc.

Im Rahmen dieser Anmeldung können unter dem Begriff "Faserbestandteile" bzw. "faserbezogene Bestandteile" insbesondere Bestandteile (zum Beispiel zerkleinerte Textilstücke) des Textilmaterials verstanden werden, die vollständig oder im Wesentlichen aus Fasern bestehen oder zumindest einen weit überwiegenden Teil von Fasermaterial (zum Beispiel mindestens 80 Gewichtsprozent Fasern, weiter insbesondere mindestens 90 Gewichtsprozent Fasern) aufweisen. Der Begriff "faserartige Bestandteile" bezieht sich dementsprechend auf Bestandteile des Textilmaterials, die ihrem Charakter nach durch Fasern geprägt werden und die allenfalls zu einem untergeordneten Teil Bestandteile aufweisen, die keinen Fasercharakter zeigen. Zum Beispiel können Fasern von Textilmaterial Cellulosefasern, wie Lyocell-Fasern, Viskosefasern und/oder Baumwollfasern aufweisen. Darüber hinaus können die Fasern auch synthetische Fasern, wie zum Beispiel Polyester und/oder Elastan, aufweisen.

Im Rahmen dieser Anmeldung können unter dem Begriff "nicht-Faserbestandteile" bzw. "nicht-faserbezogene Bestandteile" insbesondere Bestandteile (zum Beispiel zerkleinerte Textilstücke) des Textilmaterials verstanden werden, die vollständig oder im Wesentlichen nicht aus Fasermaterial bestehen oder zumindest einen weit überwiegenden Teil von Materialien aufweisen, die von Fasermaterial verschieden sind (zum Beispiel höchstens 20 Gewichtsprozent Fasern, weiter insbesondere höchstens 10 Gewichtsprozent Fasern aufweisen). Nicht-Faserbestandteile von Textilmaterial können zum Beispiel Knöpfe und Reißverschlüsse aufweisen.

Gemäß einem exemplarischen Ausführungsbeispiel der Erfindung wird ein Verfahren zum Herstellen von Cellulose aufweisenden Formkörpern aus zu recycelnden textilen Materialien, vorzugsweise Altkleidern und/oder textilen Herstellungsresten, geschaffen. Obgleich solche Ausgangsstoffe üblicherweise als textile Mischgewebe mit einem hohen Grad an Inhomogenität ihrer Zusammensetzung und mit einem hohen Anteil von Fremdstoffen (zum Beispiel Polyesternähte und Elastanfasern) und Fremdkörpern (zum Beispiel Knöpfe und Reißverschlüsse) vorliegen und daher bislang zum Herstellen von CelluloseFormkörpern mit hoher Reinheit nicht in Betracht gezogen wurden, können gemäß dem beschriebenen Verfahren Formkörper auch auf Basis von Altkleidern, Garnabfällen, Zuschnittsresten und dergleichen hergestellt werden. Bei einem entsprechenden Verfahren können die Textilmaterialien zunächst zerkleinert werden. Danach können größere Fremdkörper, die nicht in Form von Fasern vorliegen, zu einem zumindest hohen Teil abgetrennt werden. Die verbleibenden Faser-Bestandteile können dann zunächst einer mechanischen Behandlung zur mechanischen Abtrennung von Cellulosefasern gegenüber anderen Fasern und nachfolgend einer chemischen Behandlung zur chemischen Abtrennung der Cellulosefasern gegenüber nach der mechanischen Behandlung noch daran verbleibenden anderen Fasern unterzogen werden. Das Ergebnis sind relativ reine Cellulosebestandteile, aus denen chemische Regeneratfasern erzeugt werden können (zum Beispiel mittels des Lyocell-Verfahrens oder mittels des Viskoseverfahrens). Diese Prozedur ist einfach, umweltfreundlich und lässt sich mit Vorteil im großtechnischen Maßstab problemlos umsetzen. In der beschriebenen Weise wird es effizient ermöglicht, Cellulose aufweisende Formkörper aus wiederverwertetem Textilmaterial nachhaltig herzustellen.

Im Weiteren werden zusätzliche Ausführungsbeispiele des Verfahrens beschrieben.

Gemäß einem Ausführungsbeispiel kann das Zerkleinern des Textilmaterials ein Schreddern aufweisen. Insbesondere kann (zum Beispiel unter Verwendung mindestens eine Guillotine) das Textilmaterial zu Textilstücken mit einer durchschnittlichen Größe von zum Beispiel wenigen Zentimetern zerkleinert werden. Es hat sich herausgestellt, dass derart zerkleinertes Textilmaterial sehr gut dazu geeignet ist, anschließend Faserbestandteile von nicht-Faserbestandteilen zu separieren.

Gemäß einem Ausführungsbeispiel können bei dem Abtrennen von zumindest einem Teil von nicht-Faserbestandteilen Fremdstoffe aus einer Gruppe vom Rest des Textilmaterials abgetrennt werden, die besteht aus Knöpfen, Reißverschlüssen, Nähten und Textildruck. Ein Abtrennkriterium kann hierbei zum Beispiel die Größe und/oder ein Material der nicht-Faserbestandteile sein.

Gemäß einem Ausführungsbeispiel kann das Abtrennen der nicht-Faserbestandteile von den Faserbestandteilen aufgrund unterschiedlicher physikalischer Eigenschaften, insbesondere mittels Metallabscheidens und/oder gravitativen Abscheidens, erfolgen. Metallische Komponenten (zum Beispiel Reißverschlüsse, Nieten, etc.) können zum Beispiel aufgrund ihrer magnetischen Eigenschaften abgetrennt werden. Auch unterschiedliche Einflüsse der Gravitationskraft auf unterschiedliche Bestandteile können zum Trennen eingesetzt werden.

Gemäß einem Ausführungsbeispiel kann das mechanische Abtrennen basierend auf Dichteunterschieden zwischen den nicht-cellulosischen Fasern und den cellulosischen Fasern erfolgen. Zum Beispiel können in einer Zentrifuge Materialien unterschiedlicher Dichte aufgrund unterschiedlich starker Zentrifugalkräfte separiert werden. Nach Überführen der Bestandteile in ein flüssiges Medium können sich diese aufgrund unterschiedlicher Dichten zum Teil auf der Oberfläche ansammeln, während andere Bestandteile schweben oder sich am Boden absetzen.

Gemäß einem Ausführungsbeispiel kann das mechanische Abtrennen basierend auf unterschiedlichen elektrostatischen Eigenschaften zwischen den nicht-cellulosischen Fasern und den cellulosischen Fasern erfolgen. Aufgrund unterschiedlicher elektrostatischer Eigenschaften können die unterschiedlichen Fasern auf ein angelegtes elektrisches Feld in unterschiedlicher Weise reagieren.

Dieser wiederum erlaubt ein Auftrennen cellulosischer Fasern gegenüber nicht-cellulosischen Fasern.

Gemäß einem Ausführungsbeispiel kann das mechanische Abtrennen ein Suspendieren (d.h. ein Überführen in eine Suspension) der Faserbestandteile in einem flüssigen Medium, insbesondere einem wässrigen Medium, und ein Trennen der nicht-cellulosischen Fasern von den cellulosischen Fasern aufgrund unterschiedlicher physikalischer Eigenschaften in dem flüssigen Medium (insbesondere unterschiedlichen gravitativen, zentrifugalkraftbezogenen, flotativen und/oder elektrostatischen Eigenschaften) aufweisen. Wenn die unterschiedlichen Fasern in einem flüssigen Medium aufgrund ihrer unterschiedlichen Zusammensetzung unterschiedliches Verhalten zeigen, erlaubt auch dies ein Auftrennen der unterschiedlichen Faserbestandteile.

Gemäß einem Ausführungsbeispiel kann das flüssige Medium mindestens einen Zusatz zum Verstärken der unterschiedlichen physikalischen Eigenschaften aufweisen, insbesondere ein Dispergiermittel und/oder ein Quellungsmittel. Unter einem Dispergiermittel oder Dispergatoren können insbesondere Additive verstanden werden, die das Dispergieren, also eine Feinverteilung eines Stoffes (zum Beispiel einer Faser) in einem kontinuierlichen Medium (zum Beispiel in einer Flüssigkeit) ermöglichen oder stabilisieren. Unter einem Quellungsmittel können insbesondere Additive verstanden werden, die ein Quellen einer Substanz fördern. Unter Quellen kann ein Vorgang verstanden werden, bei dem ein Stoff (insbesondere eine Flüssigkeit) in einen Festkörper eindringt und eine Volumenvergrößerung des Letzteren bewirkt. Wenn dem Medium ein oder mehrere solche Additive zugesetzt werden, können die Diskrepanzen in den Eigenschaften der diversen Fasern, die das mechanische Auftrennen der unterschiedlichen Fasern bedingen, erhöht werden. Dies erhöht die Effizienz der Trennung.

Gemäß einem Ausführungsbeispiel kann das chemische Abtrennen ein selektives Lösen nur zumindest eines Teil der nicht-cellulosischen Fasern oder nur zumindest eines Teils der cellulosischen Fasern in einem Lösungsmittel, und ein Abtrennen, insbesondere Abfiltrieren, zumindest eines Teils der nicht gelösten Faserbestandteile aufweisen. Anders ausgedrückt können die verschiedenen Fasern einem (zum Beispiel flüssigen, insbesondere wässrigen) Medium zugeführt werden, in dem sich nur bestimmte dieser Fasern, insbesondere selektiv Polyesterfasern, ausgeprägt lösen, wohingegen andere Fasern, insbesondere Cellulosefasern, dort kein oder nur ein schwächeres Lösungsverhalten zeigen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem Ausführungsbeispiel kann das mechanische Abtrennen und/oder das chemische Abtrennen ein Abtrennen von synthetischen Fasern als nicht-cellulosische Fasern aufweisen. In den wiederverwerteten textilen Materialien, insbesondere Altkleider und/oder textile Abfallreste, finden sich häufig nicht-cellulosische Fasern synthetischen Ursprungs. Als Beispiel für solche synthetischen Fasern können Polyester, Polyamid und/oder Elastan genannt werden. Diese können mit den hier beschriebenen Verfahren wirksam von Cellulosefasern getrennt werden.

Gemäß einem Ausführungsbeispiel kann das chemische Abtrennen ein Zuführen einer alkalischen Lösung, insbesondere unter Verwendung oxidierender Agenzien, aufweisen, insbesondere eine alkalische Kochung. Insbesondere kann das Zuführen der alkalischen Lösung zum Abbauen nicht-cellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können.

Gemäß einem bevorzugten Ausführungsbeispiel kann die alkalische Kochung des wie beschrieben vorprozessierten cellulosebasierten (insbesondere baumwollbasierten) Textilmaterials, aus dem cellulosische Fasern angereichert werden (d.h. vorwiegend cellulosische Fasern gewonnen werden), zum Erzeugen von weiter aufgereinigtem gelösten Zellstoff folgendermaßen weiterverarbeitet werden: Die Fasern, insbesondere die bereits angereicherten cellulosischen (oder vorwiegend cellulosischen) Fasern, können mit einer alkalischen Lösung (zum Beispiel Kaliumhydroxid) in Kombination mit einem gasförmigen Oxidationsmittel (zum Beispiel O₂) in einem Druckkessel behandelt werden (vorzugsweise bei einem pH-Wert von mindestens 9), und zwar:
a) bei einer Temperatur zwischen 90 °C und 185 °C;
b) für eine Inkubationszeit von 45 Minuten bis 270 Minuten;
c) in der Anwesenheit eines cellulosestabilisierenden Additivs (zum Beispiel ein Magnesiumsalz, vorzugsweise Magnesiumsulfat; oder eine chelatbildende Verbindung auf Basis eines Übergangsmetalls, zum Beispiel Ethylendiamintetraessigsäure (EDTA)), vorzugsweise in einer Konzentration in einem Bereich zwischen 0,01 Gewichtsprozent und 5 Gewichtsprozent bezogen auf die zugeführten Fasern;
d) bei einer Alkali-Konzentration in einem Bereich zwischen 1 Gewichtsprozent und 35 Gewichtsprozent bezogen auf die zugeführten Fasern;
e) bei einem initialen Gasdruck in einem Bereich von 1 bar bis 21 bar (entsprechend ungefähr 0,1 MPa bis ungefähr 2,1 MPa).

Der erzeugte gelöste Zellstoff kann dann einer Waschprozedur unterzogen werden.

Ein teilweises Abbauen der Cellulosefasern in chemischem Milieu kann dann vorteilhaft durch Beeinflussung der chemischen Umgebung so gesteuert werden, dass ein resultierender Polymerisationsgrad der Cellulose innerhalb eines gewünschten Intervalls liegt. Dabei gilt insbesondere festzuhalten, dass ein DP-Wert (wobei DP für den durchschnittlichen Polymerisationsgrad steht, d.h. die Anzahl der Monomereinheiten pro Makromolekül) in dem vorzugsweise beim Erzeugen der Formkörper aus der wiedergewonnenen Cellulose eingesetzten Lösungsmittel NMMO zum Erreichen eines guten Lösungsverhaltens in NMMO angepasst werden kann. Typische Zahlenwerte für DP-Werte sind bei Rezyklaten unter 2000 mL/g, bevorzugt unter 1000 mL/g, besonders bevorzugt unter 800 mL/g. Die genannten Werte beziehen sich auf die Grenzviskositätszahl (GVZ, welche mit dem Polymerisationsgrad der Cellulose korreliert) in Einheiten von mL/g. Durch optionale, aber vorteilhafte zusätzliche Maßnahmen wie Selektion, Mischung, Kochung, etc., kann ein für den Lyocellprocess besonders gut geeigneter GVZ-Wert im Bereich von 200 ml/g bis 700 ml/g erreicht werden.

Gemäß einem Ausführungsbeispiel kann das chemische Abtrennen ein Umwandeln von zumindest einem Teil der nicht-cellulosischen Fasern in lösliche, insbesondere wasserlösliche Substanzen, ein Lösen der löslichen Substanzen in einem Lösungsmittel, insbesondere einem wässrigen Lösungsmittel, und ein Abtrennen, insbesondere Abfiltrieren, nicht gelöster cellulosischer Fasern von den gelösten Substanzen aufweisen. Somit können die verschiedenen Fasern einem (zum Beispiel wässrigen) Lösungsmittel zugeführt werden, in dem sich nur nicht-cellulosische Fasern ausgeprägt lösen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem Ausführungsbeispiel kann das Erzeugen der Formkörper basierend auf den cellulosischen Fasern mittels des Lyocell-Verfahrens oder mittels des Viskoseverfahrens erfolgen.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Gemäß einem Ausführungsbeispiel entsprechend dem Lyocell-Verfahren kann das Erzeugen der Formkörper ein Lösen der cellulosischen Fasern in einem Lösungsmittel und ein Überführen der gelösten cellulosischen Fasern in eine Spinnmasse, ein Extrudieren der Spinnmasse durch Spinndüsen zu den Formkörpern und ein Ausfällen der extrudierten Formkörper in einem Spinnbad aufweisen. Zwischen dem Lösen und dem Ausfällen kann eine durch das Lösen hergestellte Lyocell-Spinnlösung durch Düsen geführt werden und dort in Formkörper gesponnen werden.

Gemäß einem Ausführungsbeispiel kann das Lösen des cellulosischen Fasern mittels eines Direktlöseverfahrens und/oder mittels tertiärer Aminoxide, insbesondere N-Methylmorpholin-N-oxid, als Lösungsmittel erfolgen. Anschaulich wird die Cellulose bei einem solchen Direktlöseverfahren physikalisch in dem jeweiligen Lösungsmittel gelöst. Vorzugsweise werden hierbei als Lösungsmittel tertiäre Aminoxide eingesetzt, besonders bevorzugt N-Methylmorpholin-N-oxid (NMMO).

Gemäß einem Ausführungsbeispiel kann das Verdünnen der gelösten cellulosischen Fasern durch ein wässriges Milieu (insbesondere aufweisend ein Wasserbad, weiter insbesondere im Wesentlichen bestehend aus Wasser oder einer Mischung aus Wasser und Lösungsmittel) bewirkt werden. Anschaulich wird im Lyocell-Verfahren durch das Wasser die Konzentration des Lösungsmittels, das die Cellulose zum Lösen gebracht hat, so stark reduziert, dass die erhaltene verdünnte Lösung unter die Löslichkeitsgrenze von Cellulose absinkt und die Cellulose dadurch ausfällt bzw. präzipitiert. Das Koagulationsmedium (d.h. insbesondere das Wasserbad) kann im Wesentlichen reines Wasser sein oder kann mit einem Lösungsmittel vermischt sein.

Gemäß einem Ausführungsbeispiel kann das Verfahren ein Bleichen der chemisch abgetrennten cellulosischen Fasern aufweisen. Dadurch können Farbstoffe entfernt werden. Ein solches Bleichen kann ein oxidatives Bleichen (d.h. ein Bleichen, bei dem Farbstoffe mittels einer Oxidation angegriffen werden, zum Beispiel unter Verwendung von Sauerstoff oder einer Verbindung mit -O-O-Gruppe, etwa Wasserstoffperoxid), ein reduktives Bleichen (d.h. ein Bleichen, bei dem Farbstoffe mittels einer Reduktion angegriffen und/oder in eine lösliche Form überführt werden, insbesondere zum Entfernen von Küpenfarbstoffen wie Indigo) und/oder ein enzymatisches Bleichen (d.h. ein Bleichen, bei dem Farbstoffe mittels Enzymen angegriffen werden, zum Beispiel unter Einsatz von Proteasen, die Eiweiße biologisch spalten) aufweisen. Bevorzugt kann ein oxidatives Bleichen sein, da dieses wirkungsvoll Farbstoffe entfernen kann und eine einfache Prozessführung erlaubt.

Gemäß einem bevorzugten Ausführungsbeispiel kann das Bleichen dreistufig (insbesondere ein- oder mehrstufig, zum Beispiel mit einer, zwei, drei ,vier, fünf oder mehr Bleichstufen) durchgeführt werden, zum Beispiel mittels Durchführens einer sauren Wäsche, (insbesondere nachfolgenden) Durchführens einer Ozonbleiche und (insbesondere nachfolgenden) Durchführens einer Peroxidbleiche. Durch die saure Wäsche können Metallionen entfernt und/oder alkalisch nicht degradierbare Textilchemikalien abgebaut werden. Die Ozonbleiche kann Farbstoffe abbauen und mit Vorteil die Grenzviskositätszahl und somit den Polymerisationsgrad der Cellulose einstellen. Mit der Peroxidbleiche kann die Einstellung des Polymerisationsgrads der Cellulose weiter verfeinert werden.

Gemäß einem Ausführungsbeispiel kann das Verfahren nach dem Abtrennen von zumindest einem Teil von nicht-Faserbestandteilen ein weiteres Zerkleinern der abgetrennten nicht-Faserbestandteile, ein Rückgewinnen von Faserrückständen aus den weiter zerkleinerten nicht-Faserbestandteilen, und ein Zuführen der rückgewonnenen Faserrückstände zu den Faserbestandteilen und/oder zum mechanischen Abtrennen aufweisen. Mit den nicht-Faserbestandteilen können immer noch Cellulosebestandteile verbunden sein. Um diese für ein besonders effizientes Recycling nicht zu verlieren, können die nicht-Faserbestandteile daher nochmals einer Zerkleinerungsprozedur unterzogen werden, um aus diesen Faserreste abzutrennen, die den zuvor abgetrennten Faserbestandteilen zugeführt werden können.

Gemäß einem Ausführungsbeispiel kann das Verfahren vor dem mechanischen Abtrennen ein Separieren der Faserbestandteile (und ggf. der rückgewonnenen Faserreste bzw. Faserrückstände) zu Einzelfasern aufweisen, insbesondere mittels Reißens und/oder Mahlens. Indem vor dem mechanischen und chemischen Abtrennen die Bestandteile auf die Größe von Einzelfasern reduziert werden und die Einzelfasern optional gekürzt werden, kann die Effizienz beim nachfolgenden Separieren von cellulosischen Fasern gegenüber nicht-cellulosischen Fasern stark erhöht werden.

Gemäß einem Ausführungsbeispiel kann das Verfahren ein Nachbearbeiten der ausgefällten Cellulose zum Erhalten des Formkörpers aufweisen. Ein solches optionales Nachbearbeiten kann zum Beispiel ein Trocknen, Imprägnieren und/oder Umformen der erhaltenen Cellulose aufweisen. Durch ein entsprechendes Nachbearbeiten ist es möglich, am Ende des Lyocell-Verfahrens anwendungsspezifisch die Formkörperherstellung abzuschließen.

Gemäß einem Ausführungsbeispiel kann bei dem Verfahren höchstens (oder nur genau) ein Teil der nicht-cellulosischen Fasern, insbesondere nur genau ein Teil von synthetischen Fasern aus Polyester und/oder Elastan, aus dem Textilmaterial zum Herstellen der Formkörper mitverwendet werden.

Gemäß einem Ausführungsbeispiel kann also ein hergestellter Formkörper als Fremdstoff Elastan aufweisen, das während des Lösens der Cellulose ebenfalls mindestens teilweise gelöst wird. Elastan findet in vielen Textilien, insbesondere Kleidern, weiter insbesondere Altkleidern, Verwendung und kann als Fremdstoff bewusst in dem Cellulose aufweisenden Formkörper belassen werden. Es hat sich herausgestellt, dass Elastan in einem recycelten Cellulose-Formkörper dessen Produkteigenschaften nicht negativ beeinflusst und somit nicht aufwendig bis zu einer maximal erreichbaren Grenze aus dem Ausgangsstoff entfernt werden muss, wenn ein Formkörper hergestellt wird. Es ist sogar möglich, mit dem Belassen von Elastan in einem cellulosischen Formkörper Letzterem eine gewisse Elastizität zu verleihen. Auf diese Weise können auch Formkörper mit modifizierten elastischen Eigenschaften hergestellt werden.

Gemäß einem Ausführungsbeispiel kann ein hergestellter Formkörper als Fremdstoff Polyester aufweisen, das mindestens teilweise in dem aufbereiteten Textilmaterial belassen werden kann, wenn dieses gelöst, insbesondere ausgefällt, wird. Polyester ist ein Fremdstoff, der in Post-Consumer-Altkleidern häufig zu finden ist. Gemäß einem exemplarischen Ausführungsbeispiel kann mindestens ein Teil dieses Polyesters in dem hergestellten Cellulose-Formkörper verbleiben. Anschaulich kann ein solcher Rest von Polyester in dem Formkörper ähnlich wie ein Heißschmelzkleber fungieren und ein Fasergewebe bzw. ein Faservlies aus Cellulose mechanisch stärken. Dadurch kann durch das mindestens teilweise Belassen von Polyester in dem Celluloseformkörper ein mechanisch besonders robustes Cellulosematerial geschaffen werden, das dadurch auch mit thermoplastischen Eigenschaften versehen werden kann. Gemäß einem solchen Ausführungsbeispiel führt das Polyester also zu einer erhöhten mechanischen Robustheit bzw. Stabilität des hergestellten Formkörpers.

Gemäß einem Ausführungsbeispiel kann als Textilmaterial ein inhomogenes Textilmaterial, insbesondere Mischgewebe, verwendet werden. Gemäß einem bevorzugten Ausführungsbeispiel kann das Produkt oder die Vorform zumindest teilweise auf Basis von Altkleidern als Cellulosequelle als Ausgangsstoff zum Herstellen des Produkts oder der Vorform hergestellt werden. Zum Beispiel können bei dem Textilmaterial als Ausgangsstoff mindestens 3 Gewichtsprozent, insbesondere mindestens 10 Gewichtsprozent, weiter insbesondere mindestens 30 Gewichtsprozent, vorzugsweise mindestens 50 Gewichtsprozent, Altkleider bezogen auf das Gesamtgewicht des Textilmaterials verwendet werden. Besonders vorteilhaft können zur Herstellung des Produkts wiederverwertete Alttextilien von einem Benutzer getragene Kleidungsstücke aufweisen oder daraus bestehen.

Gemäß einem Ausführungsbeispiel kann das Textilmaterial Reste aus einer Kleidungsherstellung und/oder, insbesondere von einem Verbraucher getragene, Altkleider aufweisen oder daraus bestehen. Insbesondere kann der Ausgangsstoff eine wiederzuverwertende Cellulosequelle aufweisen oder daraus bestehen, insbesondere ganz oder teilweise aus Resten aus einer Kleidungsherstellung und/oder aus Altkleidern gebildet sein. Im Rahmen dieser Anmeldung kann unter dem Begriff "Cellulosequelle" insbesondere ein Medium (insbesondere ein Festkörpermedium) verstanden werden, das als Basis zum Herstellen eines Cellulose aufweisenden Formkörpers während eines entsprechenden Herstellungsverfahrens das hierfür verwendete Cellulosematerial bereitstellt. Ein Beispiel ist Holz bzw. Holzzellstoff. Es können also auch solche Ausgangsstoffe Eingang in das Recycling-Verfahren finden, die nicht erstmals einer natürlichen Ressource wie Holz entnommen werden, sondern einem bereits gebrauchten Produkt entstammen. Besonders vorteilhaft ist in diesem Zusammenhang die Verwendung von Post-Consumer-Altkleidern nach Verwendung durch einen Verbraucher, da solche Altkleider ein großes Reservoir an wiederzuverwertender Cellulose aufweisen.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Gemäß einem Ausführungsbeispiel kann das Textilmaterial während des Wiedergewinnungsverfahrens mindestens teilweise von Vernetzern befreit werden, die Fasern des Textilmaterials vernetzen. Dies kann zum Beispiel mittels einer alkalischen und/oder einer sauren Vorbehandlung erfolgen, insbesondere abhängig von der Art der vorliegenden Vernetzer. Ein entsprechender Vernetzer kann stören, da dieser die Lösbarkeit von Lyocell-Cellulose in Lyocell-Lösungsmittel reduzieren kann. Das mindestens teilweise Entfernen des Vernetzers im Wege einer Vorbehandlung (zum Beispiel mittels Durchführens eines alkalischen Schritts und/oder eines sauren Schritts) unter teilweiser oder vollständiger Auflösung der unerwünschten Vernetzung kann die Eignung der erhaltenen Cellulose als Chemiezellstoff zur Produktion von Regeneratformkörpern erhöhen.

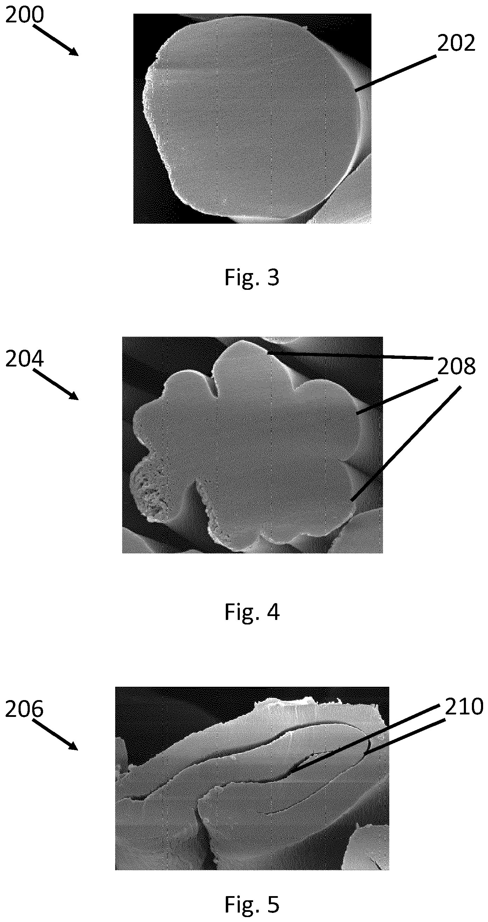

Gemäß einem Ausführungsbeispiel kann das Textilmaterial für das Recycling-Verfahren mit einer anderen Cellulosequelle versetzt werden. Beispielsweise kann die andere Cellulosequelle mindestens ein Material aus einer Gruppe aufweisen, die besteht aus Holzzellstoff, Hadernzellstoff (insbesondere Zellstoff aus Stoffresten wie Leinen, Hadern, etc.), Baumwolle (d.h. Cellulose aus einer Baumwollpflanze, siehe Figur 5), mittels eines Lyocell-Verfahrens hergestellter Cellulose (siehe Figur 3) und mittels eines Viskoseverfahrens hergestellter Cellulose (siehe Figur 4). Die andere Cellulosequelle kann flexibel und je nach Verfügbarkeit beigemengt werden. Dadurch wird der großtechnische Einsatz des Recycling-Verfahrens nicht durch etwaige vorübergehende Engpässe einer bestimmen Cellulosequelle beeinträchtigt. Vielmehr ist es zum Beispiel möglich, etwaige Fehlmengen an Altkleider-Cellulose durch andere Cellulosequellen zu kompensieren bzw. auszugleichen. Bevorzugt kann aber das Bilden des Ausgangsstoffs nur aus Altkleidern sein.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahren zum Wiederverwerten von Cellulose aufweisendem Textilmaterial zum Herstellen von Formkörpern gemäß einem exemplarischen Ausführungsbeispiel der Erfindung.
Figur 2 zeigt eine Apparatur zum Herstellen eines Cellulose aufweisenden Formkörpers gemäß einem exemplarischen Ausführungsbeispiel der Erfindung.
Figur 3 zeigt eine mittels eines Lyocell-Verfahrens hergestellte Cellulosefaser.
Figur 4 zeigt eine mittels eines Viskoseverfahrens hergestellte Cellulosefaser.
Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung wird ein Prozess zum Herstellen von Cellulose aufweisenden Formkörpern durch Recycling von Textilmaterialien beschrieben. Insbesondere werden im Weiteren Prozessschritte zur Aufbereitung von Textilmaterialien in Form von Alttextilien bzw. textilen Abfällen zu Chemiezellstoff beschrieben. Mit diesem Prozess können vorteilhaft die in den textilen Ausgangsmaterialien enthaltenen faserartigen cellulosischen Komponenten isoliert bzw. rückgewonnen werden, von nicht-cellulosischen Bestandteilen separiert werden und gemäß den Anforderungen an Chemiezellstoff aufgereinigt werden.

Im Weiteren wird eine Auswahl von Rohstoffen als Textilmaterial gemäß einem exemplarischen Ausführungsbeispiel beschrieben.

Für die Herstellung von Chemiezellstoff können als wiederzuverwendendes Textilmaterial insbesondere mit Vorteil solche Alttextilien bzw. textilen Abfälle als Rohstoffe verwendet werden, die einen überwiegenden Anteil an cellulosischen Bestandteilen wie Baumwolle und/oder Cellulose-Regeneratfasern (insbesondere Lyocell-Fasern, Viskosefasern, Modalfasern) aufweisen. Diese Textilmaterialien bzw. Rohstoffe können durch manuelle, teilautomatisierte oder vollautomatisierte Sortierverfahren aus dem Gesamtaufkommen von anfallenden Alttextilien und/oder anderen Cellulosequellen selektiv gewonnen werden.

Bevorzugt können als Textilmaterialien Rohstoffe ausgewählt werden, die ausschließlich cellulosische Komponenten enthalten. Beispiele hierfür sind Produktionsabfälle (zum Beispiel Zuschnittreste aus der Konfektionierung). Gebrauchsfertige Textilien hingegen weisen häufig einen Anteil nicht-cellulosischer Fasern auf. Beispielhaft seien polyesterbasierte Nähgarne genannt. Insbesondere bei der Verarbeitung von Alttextilien ist daher von Materialmischungen auszugehen, die als Textilmaterialien bzw. Ausgangsstoffe für das beschriebene Verfahren verwendet werden können.

Nach Auswahl der Textilmaterialien kann eine Abtrennung von nicht-faserartigen Bestandteilen bzw. nicht-Faserbestandteilen von faserartigen Bestandteilen bzw. Faserbestandteilen und eine Desintegration der Rohstoffe bzw. Textilmaterialien erfolgen.

Vielfach sind in Alttextilien als Ausgangsstoff bzw. Textilmaterial nicht-faserartige Komponenten (insbesondere makroskopische nicht-faserartige Komponenten, d.h. nicht bloß mikroskopische Komponenten wie Pigmentfarbstoffe) bzw. nicht-Faserbestandteile wie zum Beispiel Knöpfe und/oder Reißverschlüsse enthalten, die zu Beginn des Aufbereitungsprozess von den faserartigen oder Faserbestandteilen der ausgewählten Rohstoffe oder Textilmaterialien entfernt werden können. Dazu können gemäß einem exemplarischen Ausführungsbeispiel zunächst die (zum Beispiel nach Farbe, Qualität, Reinheit, etc.) vorsortierten Textilmaterialien mittels einer oder mehrerer Guillotinen oder mittels einer Schneidmühle zu Textilstücken zerkleinert werden. Die zerkleinerten Textilstücke können zum Beispiel als ca. 1 cm bis mehrere Zentimeter große Gebilde vorliegen, zum Beispiel mit einem mittleren Durchmesser in einem Bereich zwischen 1 cm und 5 cm . Es ist anschließend möglich, Textilstücke, an denen nicht faserartige Komponenten bzw. nicht-Faserbestandteile anhaften oder die aus solchen Materialien bestehen, aufgrund physischer Eigenschaften (beispielsweise mittels eines Metallabscheiders, gravitativ, oder in anderer Weise) automatisiert (insbesondere teilautomatisiert oder vollautomatisiert) aus dem Gesamtstrom zu entfernen. Um Faserverluste zu reduzieren oder ganz zu vermeiden, können mit Vorteil die so abgetrennten Teilstücke weiteren Zerkleinerungs- und Separationsstufen zugeführt und die dabei rückgewonnenen faserartigen Materialien wieder dem Hauptprozess zur Herstellung von Chemiezellstoff zugeführt werden.

Textilstücke aus rein faserartigen Materialien, d.h. die reinen Faserbestandteile des Textilmaterials, können in weiterer Folge mittels mechanischer Prozesse (zum Beispiel Reisserei, Mahlung) zusätzlich aufbereitet werden, so dass die in den Faserbestandteilen enthaltenen Gewebe, Gestricke, Garne, etc., ganz oder teilweise in Einzelfasern separiert werden können. Dabei kann es optional auch zu einer Kürzung der Faserlänge kommen. Eine Separation in Einzelfasern ist insbesondere im Falle von Mischgarnen vorteilhaft. Hier sind auf Garnebene verschiedene faserartige Materialien physisch miteinander verbunden.

Es kann dabei auch zur Freilegung mikroskopischer nicht faserartiger Bestandteile bzw. von nicht-Faserbestandteilen kommen. Zum Beispiel können in den Fasern inkorporierte Pigmente freigelegt werden, welche dann optional in weiteren Prozeduren, zum Beispiel anhand ihrer physikalischen Eigenschaften, abgetrennt werden können.

Als nächstes wird eine mechanische Separation der faserartigen Bestandteile gemäß einem exemplarischen Ausführungsbeispiel beschrieben.

Nach der Desintegration der Textilmaterialien bzw. textilen Rohmaterialien in Einzelfasern können durch mechanische Trenn- bzw. Separationsverfahren cellulosische Fasern bzw. Fasermaterialien von nicht-cellulosischen Fasern bzw. Fasermaterialien separiert werden. Hierzu können die Einzelfasern zum Beispiel in einem flüssigen Medium, bevorzugt einem wässrigen Medium, suspendiert werden und anhand ihrer physikalischen Eigenschaften zum Beispiel gravitativ und/oder elektrostatisch und/oder flotativ voneinander getrennt werden. Das Suspendieren der in Einzelfasern vereinzelten Textilstücke in Wasser kann in einem Mischtank mit einem Rührer erfolgen. Zum Beispiel können Baumwollfasern und Polyesterfasern dann anhand ihres Dichteunterschiedes gravitativ voneinander getrennt werden. Dabei können dem flüssigen Medium optional, aber vorteilhaft Zusätze wie Dispergiermittel und/oder Quellungsmittel zugegeben werden, um die Trenneffizienz des jeweiligen Verfahrens zu erhöhen. Zum Beispiel kann eine chemische Substanz zum Verringern der Oberflächenspannung von Wasser beigefügt werden, um ein Aufschwimmen der zerkleinerten Textilstücke zu unterdrücken. Eine mechanische Separation kann zur Verbesserung der Separationswirkung mehrstufig durchgeführt werden.

Bevorzugt kann eine gravitative Trennung mittels eines oder mehrerer Hydrozyklone (d.h. einem Fliehkraftabscheider) und/oder in einer Flotationszelle durchgeführt werden.

Nach einem Rühren der Suspension kann diese also gemäß einem Ausführungsbeispiel einem Hydrozyklon zugeführt werden, in dem die insbesondere in Einzelfasern separierten Textilstücke in der Suspension nach unterschiedlichen Dichten getrennt werden können. Cellulose (insbesondere aus Baumwolle) hat eine höhere Dichte als Polyethylenterephthalat (PET), das wiederum eine höhere Dichte als Elastan aufweist. Zur Verbesserung der Trenneffizienz können mehrere Hydrozyklone kaskadenartig verschalten werden.

Eine gemäß einem Ausführungsbeispiel alternativ oder ergänzend zur Behandlung in mindestens einem Hydrozyklon durchgeführte mechanische Trennung der Fasermaterialien kann auch in einer Flotationszelle durchgeführt werden. In einer Flotationszelle können insbesondere die folgenden Prozeduren durchgeführt werden:
a) Erzeugung von Gasbläschen innerhalb der Suspension
b) In Kontakt Bringen der Gasbläschen mit den Fasermaterialien aus der Suspension
c) Anlagern bzw. Anhaften der zu separierenden Fasermaterialien an die Gasbläschen
d) Aufsteigenlassen der Gas/Festkörper-Kombinationen an eine Oberfläche, wo sie abgeschöpft werden können

Aufgrund ihrer geringeren Dichte werden in der Flotationszelle die leichteren PET- und Elastan-Partikel bevorzugt aufsteigen und können abgeschöpft werden, wohingegen die schwereren Cellulosepartikel in der Flotationszelle verbleiben. Die beschriebene Behandlung in einer Flotationszelle kann kontinuierlich oder Batch-weise durchgeführt werden.

Eine alternativ oder ergänzend mögliche elektrostatische Trennung der Fasermaterialien kann trocken oder in einem Nassverfahren durchgeführt werden.

Trotz vorzugsweise mehrstufiger Ausführung kann bei den angeführten Ausführungsbeispielen der Erfindung manchmal keine vollständige Trennung der Materialien in einer rein mechanischen Abtrennung erreicht werden. In einem Ausführungsbeispiel wird der Eingangsmaterialstrom in einen hauptsächlich cellulosischen Strom (der überwiegend Cellulosefasern aufweist) und einen hauptsächlich nicht-cellulosischen Strom (der überwiegend nicht-cellulosische Fasern aufweist) getrennt, wobei im cellulosischen Strom, welcher später zu Chemiezellstoff weiterprozessiert wird, nicht-cellulosische Anteile zunächst noch in einer nachfolgenden chemischen Abtrennung gezielt weiter abgereichert werden können. Durch Auswahl geeigneter Prozessparameter und Anzahl der Prozessstufen kann ein gewünschter Zielbereich an nicht-cellulosischen Bestandteilen gemäß exemplarischen Ausführungsbeispielen eingehalten werden.

Nachfolgend wird gemäß einem exemplarischen Ausführungsbeispiel der Erfindung eine chemische Aufbereitung (insbesondere Kochung) des cellulosischen Faserstroms beschrieben.

Im Hinblick auf die Herstellung von Chemiezellstoff und insbesondere auf dessen Weiterverwendung zur Herstellung von cellulosischen Regenerat-Formkörpern und den damit verbundenen Reinheitsanforderungen ist es gemäß exemplarischen Ausführungsbeispielen der Erfindung vorteilhaft, aus dem nach dem mechanischen Abtrennen erhaltenen vorwiegend cellulosischen Stoffstrom (d.h. den cellulosischen Fasern mit geringen Beimengungen anderer Stoffe) durch chemische Verfahren eine chemische Abtrennung zu bewerkstelligen und dadurch die noch darin enthaltenen nicht-cellulosischen Bestandteile weiter, möglichst quantitativ, zu entfernen. Dies kann gemäß einem exemplarischen Ausführungsbeispiel der Erfindung durch chemische Verfahrensschritte erreicht werden. Ziel dieser Verfahrensschritte ist der selektive oder bevorzugte Abbau der nicht-cellulosischen Bestandteile.

Möglich ist gemäß einem exemplarischen Ausführungsbeispiel auch ein selektives Lösen einer Komponente der Fasermaterialien und ein nachfolgendes Abfiltrieren einer nichtgelösten Komponente. In einem Ausführungsbeispiel kann der cellulosische Faserstrom bzw. können die vorwiegend cellulosischen Fasern einer alkalischen Kochung unterzogen werden. In dieser Prozedur kann zum Beispiel Polyester in die Monomere Ethylenglykol und Terephtalsäure gespalten werden. Diese sind wasserlöslich und können gemäß einem Ausführungsbeispiel über Prozessablaugen von den Cellulosefasern abgetrennt werden. Parallel zum Polyesterabbau können in diesem Kochprozess auch Celluloseabbaureaktionen ablaufen. Durch geeignete Wahl der Prozessparameter kann der Celluloseabbau gemäß einem Ausführungsbeispiel der Erfindung so gesteuert werden, dass ein gewisser Zielpolymerisationsgrad eingestellt wird. Dies ist vorteilhaft, da der Cellulosepolymerisationsgrad (ausgedrückt als Grenzviskositätszahl) ein Spezifikationskriterium für Chemiezellstoff ist.

Mit Vorteil kann gemäß einem Ausführungsbeispiel der alkalische Kochprozess durch den Einsatz oxidierender Agentien unterstützt werden.

Bevorzugt gleichzeitig können gemäß einem Ausführungsbeispiel bei diesem Kochprozess gewisse Anteile an Textilchemikalien, welche in den Ausgangsmaterialien intrinsisch enthalten sind (zum Beispiel Farbstoffe), gelöst bzw. abgebaut und in lösliche Formen umgewandelt werden.

Danach kann weiters eine Bleich-Prozedur durchgeführt werden, um Farbstoffe zu entfernen oder zu deaktivieren.

Insbesondere im Anschluss an die Kochung kann gemäß einem Ausführungsbeispiel der Erfindung der cellulosische Faserstrom (d.h. der Faserstrom, der weit überwiegend cellulosische Fasern bzw. Zellstoff enthält) in einer vorzugsweise mehrstufigen Bleichsequenz weiter aufbereitet werden. Ziel einer solchen vorteilhaften Bleichsequenz ist die Einstellung eines hohen Weißgrads durch möglichst vollständige Entfernung bzw. vollständigen Abbau aller noch vorhandenen Farbstoffe bzw. Textilchemikalien. Dabei können gemäß einem Ausführungsbeispiel oxidative, reduktive und/oder enzymatische Bleichstufen miteinander kombiniert werden. Bei einem einfachen Ausführungsbeispiel ist eine rein oxidative Bleichstufe mit Vorteil einsetzbar.

Gemäß einem exemplarischen Ausführungsbeispiel kann mit Vorteil eine Sequenz A-Z-P angewandt werden. Die A-Stufe (saure Wäsche) dient hierbei insbesondere zum Entfernen gelöster Metallionen und zum Abbau alkalisch nicht degradierbarer Textilchemikalien. Die Z-Stufe (Ozonbleiche) dient einerseits als stark oxidative Stufe zum Abbau der Chromophore/Farbstoffe und gleichzeitig als weitere Stufe zur Einstellung der Grenzviskositätszahl. Die Abschließende P-Stufe (Peroxidbleiche) dient dann insbesondere zur Feineinstellung des Polymerisationsgrades (analog der Grenzviskositätszahl) sowie zur Erreichung des erwünschten Endweißgrads. Die beschriebenen Bleichstufen sind optional: Anzahl und Art der Bleichstufen sowie deren konkrete Prozessbedingungen können im Hinblick auf jeweils zur Verfügung stehende Materialien bzw. auf eine jeweilige Applikation angepasst werden.

Insbesondere kann vorteilhaft eine Kreislaufführung von Reaktionsmedien und Prozesschemikalien erfolgen. Mit einer vorteilhaften Implementierung von Rückgewinnungsprozessen kann gemäß exemplarischen Ausführungsbeispielen der Erfindung der Ressourcenbedarf (insbesondere im Hinblick auf Chemikalien, Energie, Wasser) des gesamten Aufbereitungsprozesses gering gehalten werden.

Als nächstes wird ein Ausführungsbeispiel einer Regeneratformkörperproduktion, d.h. der Herstellung von cellulosischen Formkörpern, auf Basis der aus dem Textilmaterial separierten Cellulose beschrieben.

Durch Auswahl geeigneter Rohstoffe bzw. Textilmaterialien, passender Prozessparameter sowie der Kombination und gegenseitiger Abstimmung der beschriebenen Prozessschritte ist es mittels des oben beschriebenen Aufbereitungsprozesses möglich, Chemiezellstoff aus Alttextilien bzw. textilen Abfällen als Ausgangsstoffe oder Textilmaterialien herzustellen. Dieser Chemiezellstoff kann zur Produktion cellulosischer Regenerat-Formkörper, insbesondere mittels des Viskoseverfahrens und/oder des (insbesondere auf Basis von NMMO-Lösungsmittel durchgeführten) Lyocell-Verfahrens, eingesetzt werden.

Die Qualität der dabei erhaltenen cellulosischen Regenerat-Formkörper ist derjenigen gleichwertig, welche beim Einsatz herkömmlicher holzbasierter Chemiezellstoffe erzielt werden kann.

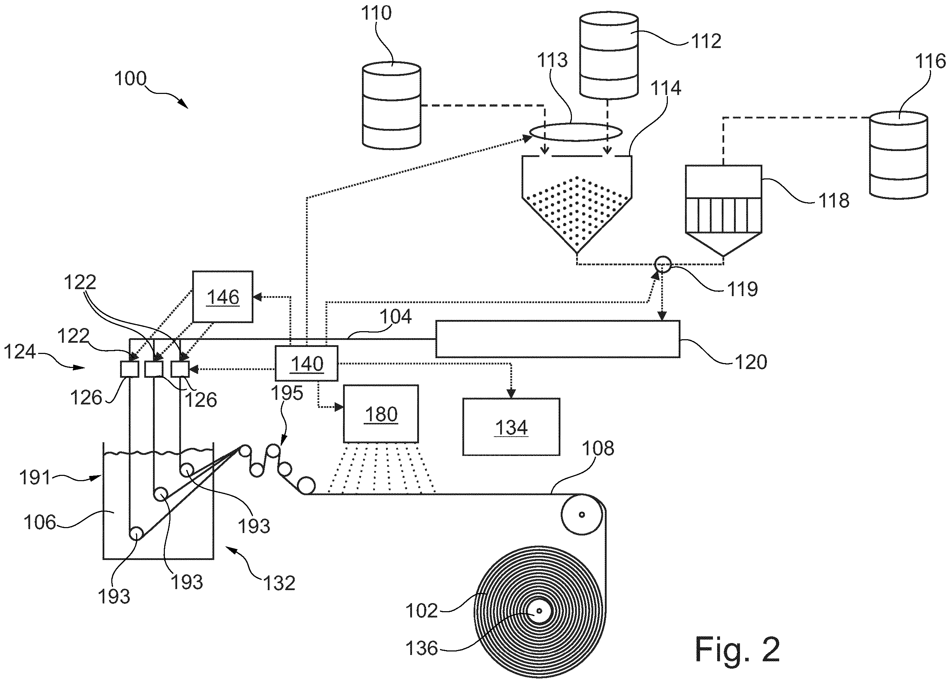

**Figur 1** zeigt ein Flussdiagramm 50 eines Verfahren zum Wiederverwerten von Altkleidern als Cellulose aufweisendes Textilmaterial zum Herstellen von Formkörpern 102 (siehe Figur 2) aus Cellulose gemäß einem exemplarischen Ausführungsbeispiel der Erfindung.

Als Textilmaterial wird ein inhomogenes Textilmaterial oder Mischgewebe in Form von Post-Consumer Altkleidern verwendet, die von einem Verbraucher benutzt und entsorgt worden sind (siehe Bezugszeichen 52).

Zunächst wird, wie mit Bezugszeichen 56 dargestellt, das Textilmaterial in einer oder mehreren Guillotinen und/oder durch Schreddern, bevorzugt unter Einsatz von Schneidmessern, zerkleinert. Dadurch werden zerkleinerte Textilstücke zum Beispiel im Größenbereich zwischen 0,5×0,5 cm² und 10×10cm² erhalten.

Anschließend erfolgt ein Abtrennen 58 von nicht-Faserbestandteilen oder Textilstücken des zerkleinerten Textilmaterials gegenüber Faserbestandteilen oder Textilstücken des zerkleinerten Textilmaterials. Als nicht-Faserbestandteile können hierbei Textilstücke mit Fremdstoffen wie Knöpfe, Reißverschlüsse, Nähte und/oder Textildruck abgetrennt werden. Genauer gesagt werden von den zerkleinerten Textilstücken jene entfernt, die ein Material aufweisen oder von einem Material geprägt werden, das von Fasern unterschiedlich ist. Bevorzugt kann das Abtrennen 58 der nicht-Faserbestandteile von den Faserbestandteilen durch ein Prozessieren erfolgen, das die nicht-Faserbestandteile aufgrund, verglichen mit den Faserbestandteilen, unterschiedlicher physischer Eigenschaften abtrennt. Zum Beispiel können Textilstücke aus oder mit metallischen Nieten oder Reißverschlüssen mittels eines Metallabscheiders vom Rest der zerkleinerten Textilstücke abgetrennt werden. Kunststoffknöpfe können mittels gravitativen Abscheidens von textilfaserdominierten Textilstücken getrennt werden, indem die unterschiedlichen Dichten der heterogenen Mischung von Textilstücken ausgenutzt werden (beispielsweise mittels Zentrifugieren, Abfiltrierens, etc.).

Anschließend kann optional ein weiteres Zerkleinern 60 der abgetrennten (vorwiegend nicht aus Fasern gebildeten) nicht-Faserbestandteile durchgeführt werden. Zum Beispiel können die nicht-Faserbestandteile nochmals mit einer Guillotine zerstückelt werden. Dadurch können Reste von Fasermaterialien aus den durch nicht-Faserbestandteile dominierten Textilstücken abgetrennt und dem Verwertungsprozess wieder zugeführt werden. Anders ausgedrückt erfolgt ein Rückgewinnen 62 von Faserrückständen (in Form weiterer Faserbestandteile) aus den weiter zerkleinerten vorwiegend nicht-Faserbestandteilen. Die rückgewonnenen Faserrückstände können den Faserbestandteilen zur weiteren Extraktion von Cellulose wieder zugeführt werden, siehe Bezugszeichen 63.

Nachfolgend kann, zum Beispiel mittels Schneidmühlen, ein weiteres Zerkleinern oder Separieren 64 der Faserbestandteile und der optional rückgewonnenen Faserrückstände zu Einzelfasern durchgeführt werden. Die genannten Bestandteile bzw. Textilstücke können daher in Fäden und diese dann zu vollständig vereinzelten Fasern zerkleinert werden.

Danach erfolgt gemäß dem beschriebenen Ausführungsbeispiel ein mechanisches Abtrennen 66 von nicht-cellulosischen Fasern (insbesondere synthetischen Fasern wie Polyester, Polyamid bzw. Elastan, die häufig in Alttextilien vorkommen) der Faserbestandteile (inklusive der Faserrückstände) von cellulosischen Fasern der Faserbestandteile. Das mechanische Abtrennen 66 kann in verschiedenen Ausführungsbeispielen auf unterschiedliche Weise durchgeführt werden. Zum Beispiel kann das mechanische Abtrennen 66 basierend auf Dichteunterschieden zwischen den nicht-cellulosischen Fasern und den cellulosischen Fasern erfolgen. Alternativ oder ergänzend kann das mechanische Abtrennen 66 basierend auf unterschiedlichen elektrostatischen Eigenschaften zwischen den nicht-cellulosischen Fasern und den cellulosischen Fasern erfolgen.

In dem in Figur 1 dargestellten Ausführungsbeispiel weist das mechanische Abtrennen 66 ein Suspendieren 68 der Faserbestandteile in einem wässrigen Medium auf. Anders ausgedrückt werden die Faserbestandteile in einen Flüssigkeitsbehälter eingefüllt. Danach erfolgt ein Trennen 70 der nicht-cellulosischen Fasern von den cellulosischen Fasern in dem wässrigen Medium aufgrund unterschiedlicher flotativer Eigenschaften der beiden genannten Konstituenten. Flotation ist ein physikalisch-chemisches Trennverfahren für feinkörnige Feststoffe aufgrund der unterschiedlichen Oberflächenbenetzbarkeit der Partikel. Vorteilhaft kann dem wässrigen Medium, in dem die hier flotative Trennung durchgeführt wird, ein Dispergiermittel und/oder ein Quellungsmittel zugefügt werden, das die bei der Trennung ausgenutzten unterschiedlichen physikalischen Eigenschaften von nicht-cellulosischen Fasern gegenüber jenen von cellulosischen Fasern verstärkt.

Nach diesem mechanischen Abtrennen 66 kann mit Vorteil ein chemisches Abtrennen 76 eines anderen Teils der nicht-cellulosischen (insbesondere synthetischen) Fasern von den cellulosischen Fasern erfolgen, um den Cellulosegehalt des Extrakts weiter zu erhöhen. Auch für das chemische Abtrennen 76 gibt es verschiedene Möglichkeiten.

In dem beschriebenen Ausführungsbeispiel kann das chemische Abtrennen 76 ein selektives Lösen 72 nur der cellulosischen Fasern in einem Lösungsmittel (zum Beispiel NMMO) aufweisen. Anders ausgedrückt kann das Lösungsmittel so ausgewählt werden, dass nur die cellulosischen Fasern, nicht hingegen nicht-cellulosische (PET-)Fasern darin in nennenswerter Weise gelöst werden. Dies erlaubt ein nachfolgendes Abfiltrieren der nicht in Lösung übergehenden nicht-cellulosischen (PET-)Fasern, siehe Bezugszeichen 74.

In einem besonders bevorzugten Ausführungsbeispiel weist das chemische Abtrennen 76 nach dem mechanischen Abtrennen 66 (mit oder ohne Zwischenschaltung der Prozedur gemäß Bezugszeichen 72 und 74) eine alkalische Kochung mittels einer alkalischen Lösung unter Verwendung oxidierender Agenzien auf (siehe Bezugszeichen 78).

Dabei kann bei dem chemischen Abtrennen 76 ein Umwandeln 80 von nicht-cellulosischen Fasern in wasserlösliche Substanzen erfolgen. Zum Beispiel kann Polyester durch eine alkalische Kochung in wasserlösliche Monomere überführt werden. Es kann dann ein Lösen 82 der wasserlöslichen Substanzen in einem wässrigen Lösungsmittel durchgeführt werden. Nachfolgend kann es zu einem Abfiltrieren nicht gelöster cellulosischer Fasern von den gelösten Substanzen kommen (siehe Bezugszeichen 84).

Nach dem chemischen Abtrennen 76 kann das Verfahren mit einem Bleichen 86 der chemisch abgetrennten cellulosischen Fasern fortgesetzt werden, um Farbstoffe oder dergleichen zu entfernen oder zu deaktivieren. Zum Beispiel kann das Bleichen 86 ein oxidatives Bleichen sein. Gemäß einem bevorzugten Ausführungsbeispiel der Erfindung kann das Bleichen 86 ein Durchführen 88 einer sauren Wäsche, gefolgt vom Durchführen 90 einer Ozonbleiche, wiederum gefolgt vom Durchführen 92 einer Peroxidbleiche aufweisen. Durch das Bleichen 86 können Farbstoffe und andere chemische Reststoffe in den wiederverwerteten Textilmaterialien entfernt werden.

Aus dem daraus erhaltenen cellulosischen Material werden danach mittels des Lyocell-Verfahrens (oder alternativ mittels des Viskoseverfahrens) cellulosische Formkörper 102 in Form von Vlies erzeugt (siehe Bezugszeichen 94).

Hierfür kann ein direktes Lösen 96 des nach dem Bleichen 86 erhaltenen cellulosischen Material in einem Lösungsmittel 116 (vergleiche Figur 2, zum Beispiel tertiäre Aminoxide wie zum Beispiel N-Methylmorpholin-N-oxid (NMMO)) erfolgen, vorteilhaft ohne weitere chemische Vorbehandlung. Genauer gesagt kann das genannte Material direkt in Lösung übergeführt werden, wodurch eine Spinnmasse gebildet wird. Auf diese Weise kann das Herstellungs- bzw. Recyclingverfahren außergewöhnlich einfach und schnell sowie umweltfreundlich durchgeführt werden. Es hat sich überraschenderweise herausgestellt, dass nach der beschriebenen Prozedur in dem wiedergewonnenen cellulosischen Material verbleibende geringe Mengen an Fremdstoffen (zum Beispiel Polyester bzw. Elastan) das Lyocell-Verfahren nicht stören und die Qualität der wiedergewonnenen Lyocell-Cellulose nicht negativ beeinflussen. Im Gegenteil, gewisse Mengen von Elastan können in den hergestellten Cellulosefasern verbleiben, ohne deren Eigenschaften zu verschlechtern. Zum Beispiel kann in einem jeweiligen Formkörper Elastan als Fremdstoff mit mindestens 0,001 Gewichtsprozent, insbesondere mindestens 0,01 Gewichtsprozent, weiter insbesondere mindestens 1 Gewichtsprozent, vorliegen, bezogen auf das Gesamtgewicht des Formkörpers. Auch gewisse Mengen verbleibenden Polyesters stören das erhaltene Produkt nicht, sondern können sogar die mechanische Integrität des herzustellenden Formkörpers 102 stärken. Zum Beispiel kann in einem jeweiligen Formkörper Polyester als Fremdstoff mit mindestens 0,001 Gewichtsprozent, insbesondere mindestens 0,01 Gewichtsprozent, weiter insbesondere mindestens 1 Gewichtsprozent, vorliegen, bezogen auf das Gesamtgewicht des Formkörpers.

Nach dem Lösen 96 des genannten Materials in Lösungsmittel (bevorzugt NMMO) kann die erhaltene Lyocell-Spinnlösung durch eine oder mehrere Spinndüsen gepresst werden, wodurch Fäden bzw. Filamente honigzäher Viskosität entstehen (siehe Block 97, der dieses Spinnen bzw. Extrudieren betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in Luftfeuchtigkeit bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 98. Dadurch wird eine Vorform des Formkörpers 102 erhalten. Somit erfolgt ein Extrudieren 97 der Spinnmasse zu Formkörpern 102 im Wege eines Ausfällens 98 in einem Spinnbad (siehe Bezugszeichen 191 in Figur 2).

Ferner kann das Verfahren ein Nachbearbeiten 99 der ausgefällten Formkörper 102 aufweisen. Eine solche Nachbearbeitung 99 kann zum Beispiel ein Trocknen, Imprägnieren und/oder Umformen der erhaltenen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden. Die Prozeduren entsprechend dem Erzeugen 94 der Formkörper 102 können mittels der in Figur 2 dargestellten Apparatur 100 durchgeführt werden. Als Ausgangsstoff 110 wird hierfür das Cellulose aufweisende Material eingesetzt, dass nach dem Bleichen 86 erhalten wird.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Recycling von Cellulose aufweisendem Textilmaterial zum Herstellen von regenerierten cellulosischen Formkörpern (102), wobei das Verfahren aufweist:
Zerkleinern (56) des Textilmaterials;
Abtrennen (58) von zumindest einem Teil von nicht-Faserbestandteilen des zerkleinerten Textilmaterials von Faserbestandteilen des zerkleinerten Textilmaterials;
mechanisches Abtrennen (66) zumindest eines Teils von nicht-cellulosischen Fasern der Faserbestandteile von cellulosischen Fasern der Faserbestandteile und nachfolgend
chemisches Abtrennen (76) zumindest eines weiteren Teils der nicht-cellulosischen Fasern von den cellulosischen Fasern;
Erzeugen (94) der Formkörper (102) basierend auf den cellulosischen Fasern nach dem mechanischen Abtrennen (66) und dem chemischen Abtrennen (76).

2. Verfahren gemäß Anspruch 1, aufweisend zumindest eines der folgenden Merkmale:
wobei das Zerkleinern (56) des Textilmaterials ein Schreddern aufweist;
wobei bei dem Abtrennen (58) von zumindest einem Teil von nicht-Faserbestandteilen Fremdstoffe aus einer Gruppe vom Rest des Textilmaterials abgetrennt werden, die besteht aus Knöpfen, Reißverschlüssen, Nähten und Textildruck;
wobei das Abtrennen (58) der nicht-Faserbestandteile von den Faserbestandteilen aufgrund unterschiedlicher physikalischer Eigenschaften, insbesondere mittels Metallabscheidens und/oder gravitativen Abscheidens, erfolgt;
wobei das mechanische Abtrennen (66) basierend auf Dichteunterschieden zwischen den nicht-cellulosischen Fasern und den cellulosischen Fasern erfolgt;
wobei das mechanische Abtrennen (66) basierend auf unterschiedlichen elektrostatischen Eigenschaften zwischen den nicht-cellulosischen Fasern und den cellulosischen Fasern erfolgt.

3. Verfahren gemäß Anspruch 1 oder 2, wobei das mechanische Abtrennen (66) aufweist:
Suspendieren (68) der Faserbestandteile in einem flüssigen Medium, insbesondere einem wässrigen Medium;
Trennen (70) der nicht-cellulosischen Fasern von den cellulosischen Fasern aufgrund unterschiedlicher physikalischer Eigenschaften in dem flüssigen Medium, insbesondere unterschiedlichen gravitativen, zentrifugalkraftbezogenen, flotativen und/oder elektrostatischen Eigenschaften.

4. Verfahren gemäß Anspruch 3, wobei das flüssige Medium mindestens einen Zusatz zum Verstärken der unterschiedlichen physikalischen Eigenschaften von nicht-cellulosischen Fasern und von cellulosischen Fasern aufweist, insbesondere ein Dispergiermittel und/oder ein Quellungsmittel.

5. Verfahren gemäß einem der Ansprüche 1 bis 4, wobei das chemische Abtrennen (76) aufweist:
selektives Lösen (72) nur zumindest eines Teil der nicht-cellulosischen Fasern oder nur zumindest eines Teils der cellulosischen Fasern in einem Lösungsmittel;
Abtrennen (74), insbesondere Abfiltrieren, zumindest eines Teils der nicht gelösten Faserbestandteile.

6. Verfahren gemäß einem der Ansprüche 1 bis 5, wobei das chemische Abtrennen (76) ein Zuführen einer alkalischen Lösung, insbesondere unter Verwendung oxidierender Agenzien, aufweist, insbesondere eine alkalische Kochung.

7. Verfahren gemäß Anspruch 6, wobei das Zuführen der alkalischen Lösung zum Abbauen nicht-cellulosischer Fasern, insbesondere synthetischer Fasern, weiter insbesondere von Polyesterfasern, erfolgt.

8. Verfahren gemäß einem der Ansprüche 1 bis 7, aufweisend zumindest eines der folgenden Merkmale:
wobei das chemische Abtrennen (76) aufweist: Umwandeln (80) von zumindest einem Teil der nicht-cellulosischen Fasern in lösliche, insbesondere wasserlösliche, Substanzen, Lösen (82) der löslichen Substanzen in einem Lösungsmittel, insbesondere einem wässrigen Lösungsmittel, und Abtrennen (84), insbesondere Abfiltrieren, nicht gelöster cellulosischer Fasern von den gelösten Substanzen;
wobei das mechanische Abtrennen (66) und/oder das chemische Abtrennen (76) ein Abtrennen von synthetischen Fasern als nicht-cellulosische Fasern aufweist;
wobei das Erzeugen (94) der Formkörper (102) basierend auf den cellulosischen Fasern mittels des Lyocell-Verfahrens oder mittels des Viskoseverfahrens erfolgt.

9. Verfahren gemäß einem der Ansprüche 1 bis 8, wobei das Erzeugen (94) der Formkörper aufweist:
Lösen (96) der cellulosischen Fasern in einem Lösungsmittel (116) und Überführen der gelösten cellulosischen Fasern in eine Spinnmasse;
Extrudieren (97) der Spinnmasse durch Spinndüsen und nachfolgendes Ausfällen (98) in einem Spinnbad (191).

10. Verfahren gemäß Anspruch 9, aufweisend zumindest eines der folgenden Merkmale:
wobei das Lösen (96) der cellulosischen Fasern mittels eines Direktlöseverfahrens und/oder mittels tertiärer Aminoxide, insbesondere N-Methylmorpholin-N-oxid, als Lösungsmittel erfolgt;
wobei das Ausfällen (98) in einem Spinnbad (191) durch ein wässriges Milieu, insbesondere aufweisend eine Luftfeuchtigkeit und/oder ein Wasserbad, weiter insbesondere im Wesentlichen bestehend aus Wasser oder einer Mischung aus Wasser und Lösungsmittel (116), bewirkt wird.

11. Verfahren gemäß einem der Ansprüche 1 bis 10, wobei das Verfahren ein Bleichen (86) der chemisch abgetrennten cellulosischen Fasern aufweist.

12. Verfahren gemäß Anspruch 11, wobei das Bleichen (86) zumindest eines aus einer Gruppe aufweist, die besteht aus einem oxidativen Bleichen, einem reduktiven Bleichen und einem enzymatischen Bleichen.

13. Verfahren gemäß Anspruch 11 oder 12, wobei das Bleichen (86) aufweist:
Durchführen (88) einer sauren Wäsche;
insbesondere nachfolgend, Durchführen (90) einer Ozonbleiche; und
insbesondere nachfolgend, Durchführen (92) einer Peroxidbleiche.

14. Verfahren gemäß einem der Ansprüche 1 bis 13, wobei das Verfahren nach dem Abtrennen (58) von zumindest einem Teil der nicht-Faserbestandteile aufweist:
weiteres Zerkleinern (60) der abgetrennten nicht-Faserbestandteile;
Rückgewinnen (62) von Faserrückständen aus den weiter zerkleinerten nicht-Faserbestandteilen; und
Zuführen (63) der rückgewonnenen Faserrückstände zu den Faserbestandteilen und/oder zum mechanischen Abtrennen (66).

15. Verfahren gemäß einem der Ansprüche 1 bis 14, aufweisend zumindest eines der folgenden Merkmale:
wobei das Verfahren vor dem mechanischen Abtrennen (66) ein Separieren (64) der Faserbestandteile zu Einzelfasern aufweist, insbesondere mittels Reißens und/oder Mahlens;
wobei das Verfahren ein Nachbearbeiten (99) der ausgefällten Formkörper (102) aufweist;
wobei bei dem Verfahren höchstens ein Teil der nicht-cellulosischen Fasern, insbesondere höchstens ein Teil von Polyester und/oder höchstens ein Teil von Elastan, aus dem Textilmaterial zum Herstellen der Formkörper (102) mitverwendet wird;
wobei als Textilmaterial ein inhomogenes Textilmaterial, insbesondere ein textiles Mischgewebe, verwendet wird;
wobei das Textilmaterial Reste aus einer Kleidungsherstellung und/oder, insbesondere von einem Verbraucher getragene, Altkleider aufweist oder daraus besteht;
wobei ein Formkörper (102) eine Faser, eine Folie, ein Schwamm, eine Kugel oder ein Bead ist;
wobei das Verfahren ein Weiterverarbeiten der Formkörper (102) zu einem Produkt, insbesondere zu einem textilen Flächengebilde, aufweist.

## Claims

1. Method of recycling a cellulose-comprising textile material for manufacturing regenerated cellulosic molded bodies (102), wherein the method comprises:
comminuting (56) the textile material;
separating (58) at least a part of non-fiber constituents of the comminuted textile material from fiber constituents of the comminuted textile material;
mechanically separating (66) at least a part of non-cellulosic fibers of the fiber constituents from cellulosic fibers of the fiber constituents, and subsequently
chemically separating (76) at least one further part of the non-cellulosic fibers from the cellulosic fibers;
generating (94) the molded bodies (102) based on the cellulosic fibers after mechanically separating (66) and chemically separating (76).

2. Method according to claim 1, comprising at least one of the following features:
wherein comminuting (56) the textile material comprises shredding;
wherein, during separating (58) at least a part of non-fiber constituents, foreign matters from a group which consists of buttons, zip fasteners, seams, and textile print, are separated from a rest of the textile material;
wherein separating (58) the non-fiber constituents from the fiber constituents is performed due to different physical properties, in particular by metal separation and/or gravitational separation;
wherein mechanically separating (66) is performed based on density differences between the non-cellulosic fibers and the cellulosic fibers;
wherein mechanically separating (66) is performed based on different electrostatic properties between the non-cellulosic fibers and the cellulosic fibers.

3. Method according to claim 1 or 2, wherein mechanically separating (66) comprises:
suspending (68) the fiber constituents in a liquid medium, in particular an aqueous medium;
separating (70) the non-cellulosic fibers from the cellulosic fibers due to different physical properties in the liquid medium, in particular different gravitational, centrifugal force-related, flotational and/or electrostatic properties.

4. Method according to claim 3, wherein the liquid medium comprises at least one additive for enhancing the different physical properties of non-cellulosic fibers and of cellulosic fibers, in particular a dispersing agent and/or a swelling agent.

5. Method according to one of the claims 1 to 4, wherein chemically separating (76) comprises:
selectively solving (72) only at least a part of the non-cellulosic fibers or only at least a part of the cellulosic fibers in a solvent;
separating (74), in particular filtering, at least a part of the non-solved fiber constituents.

6. Method according to one of the claims 1 to 5, wherein chemically separating (76) comprises supplying an alkaline solution, in particular using oxidizing agents, in particular an alkaline boiling.

7. Method according to claim 6, wherein supplying the alkaline solution is performed for degrading non-cellulosic fibers, in particular synthetic fibers, further in particular polyester fibers.

8. Method according to one of the claims 1 to 7, comprising at least one of the following features:
wherein chemically separating (76) comprises: converting (80) at least a part of the non-cellulosic fibers to soluble, in particular water-soluble, substances, solving (82) the soluble substances in a solvent, in particular an aqueous solvent, and separating (84), in particular filtering, non-solved cellulosic fibers from the solved substances;
wherein mechanically separating (66) and/or chemically separating (76) comprises separating synthetic fibers as non-cellulosic fibers;
wherein generating (94) the molded bodies (102) is performed based on the cellulosic fibers by the lyocell-method or by the viscose-method.

9. Method according to one of the claims 1 to 8, wherein generating (94) the molded bodies comprises:
solving (96) the cellulosic fibers in a solvent (116) and transferring the solved cellulosic fibers in a spinning mass;
extruding (97) the spinning mass through spinning nozzles and subsequently precipitating (98) in a spinning bath (191).

10. Method according to claim 9, comprising at least one of the following features:
wherein solving (96) the cellulosic fibers is performed by a direct solving method and/or by tertiary amine oxides, in particular N-methylmorpholine-N-oxide, as solvent;
wherein precipitating (98) in a spinning bath (191) is caused by an aqueous milieu, in particular comprising an air humidity and/or a water bath, further in particular substantially consisting of water or a mixture of water and solvent (116).

11. Method according to one of the claims 1 to 10, wherein the method comprises bleaching (86) the chemically separated cellulosic fibers.

12. Method according to claim 11, wherein bleaching (86) comprises at least one of a group which consists of oxidative bleaching, reductive bleaching, and enzymatic bleaching.

13. Method according to claim 11 or 12, wherein bleaching (86) comprises:
performing (88) an acidic wash;
in particular subsequently, performing (90) ozone bleaching; and
in particular subsequently, performing (92) peroxide bleaching.

14. Method according to one of the claims 1 to 13, wherein the method, after separating (58) at least a part of the non-fiber constituents, comprises:
further comminuting (60) the separated non-fiber constituents;
recovering (62) fiber residues from the further comminuted non-fiber constituents; and
supplying (63) the recovered fiber residues to the fiber constituents and/or to mechanically separating (66).

15. Method according to one of the claims 1 to 14, comprising at least one of the following features:
wherein the method, prior to mechanically separating (66), comprises separating (64) the fiber constituents to single fibers, in particular by ripping and/or milling;
wherein the method comprises post-processing (99) the precipitated molded bodies (102);
wherein in the method at most a part of the non-cellulosic fibers, in particular at most a part of polyester and/or at most a part of elastane, from the textile material is co-used for manufacturing the molded bodies (102);
wherein a non-homogenous textile material, in particular a textile mixed tissue, is used as textile material;
wherein the textile material comprises or consists of residues from a clothing manufacture and/or used clothes which are worn by a user;
wherein a molded body (102) is a fiber, a foil, a sponge, a sphere, or a bead;
wherein the method comprises further processing the molded bodies (102) to a product, in particular to a textile planar structure.

## Revendications

1. Procédé de recyclage de matériau textile présentant de la cellulose pour fabriquer des corps moulés cellulosiques régénérés (102), **caractérisé en ce que** le procédé présente :
la fragmentation (56) du matériau textile ;
la séparation (58) d'au moins une partie de constituants non fibreux du matériau textile fragmenté de constituants fibreux du matériau textile fragmenté ;
la séparation mécanique (66) d'au moins une partie de fibres non cellulosiques des constituants fibreux de fibres cellulosiques des constituants fibreux, puis
la séparation chimique (76) d'au moins une autre partie des fibres non cellulosiques des fibres cellulosiques ;
la génération (94) des corps moulés (102) sur la base des fibres cellulosiques après la séparation mécanique (66) et la séparation chimique (76).

2. Procédé selon la revendication 1 présentant au moins une des caractéristiques suivantes :
dans lequel la fragmentation (56) du matériau textile présente un déchiquetage ;
dans lequel lors de la séparation (58) d'au moins une partie de constituants non fibreux, des matières étrangères provenant d'un groupe qui est constitué de boutons, de fermetures éclair, de coutures et d'impression textile, sont séparées du reste du matériau textile ;
dans lequel la séparation (58) des constituants non fibreux des constituants fibreux a lieu en raison de différentes propriétés physiques, en particulier au moyen d'un dépôt de métal et/ou d'un dépôt gravitationnel ;
dans lequel la séparation mécanique (66) a lieu sur la base de différences de densité entre les fibres non cellulosiques et les fibres cellulosiques ;
dans lequel la séparation mécanique (66) a lieu sur la base de différentes propriétés électrostatiques entre les fibres non cellulosiques et les fibres cellulosiques.

3. Procédé selon la revendication 1 ou 2, **caractérisé en ce que** la séparation mécanique (66) présente :
la mise en suspension (68) des constituants fibreux dans un milieu liquide, en particulier un milieu aqueux ;
la séparation (70) des fibres non cellulosiques des fibres cellulosiques en raison de différentes propriétés physiques dans le milieu liquide, en particulier de différentes propriétés gravitationnelles, liées à la force centrifuge, de flottation et/ou électrostatiques.

4. Procédé selon la revendication 3, **caractérisé en ce que** le milieu liquide présente au moins un additif pour renforcer les différentes propriétés physiques de fibres non cellulosiques et de fibres cellulosiques, en particulier un agent dispersant et/ou un agent gonflant.

5. Procédé selon l'une quelconque des revendications 1 à 4, **caractérisé en ce que** la séparation chimique (76) présente :
la dissolution sélective (72) de seulement au moins une partie des fibres non cellulosiques ou de seulement au moins une partie des fibres cellulosiques dans un solvant ;
la séparation (74), en particulier la séparation par filtration, d'au moins une partie des constituants fibreux non dissous.

6. Procédé selon l'une quelconque des revendications 1 à 5, **caractérisé en ce que** la séparation chimique (76) présente une amenée d'une solution alcaline, en particulier en utilisant des agents oxydants, en particulier une décoction alcaline.

7. Procédé selon la revendication 6, **caractérisé en ce que** l'amenée de la solution alcaline a lieu pour décomposer des fibres non cellulosiques, en particulier des fibres synthétiques, par ailleurs en particulier des fibres de polyester.

8. Procédé selon l'une quelconque des revendications 1 à 7, présentant au moins une des caractéristiques suivantes :
dans lequel la séparation chimique (76) présente : la transformation (80) d'au moins une partie des fibres non cellulosiques en substances solubles, en particulier hydrosolubles, la dissolution (82) des substances solubles dans un solvant, en particulier un solvant aqueux, et la séparation (84), en particulier la séparation par filtration, de fibres cellulosiques non dissoutes des substances dissoutes ;
dans lequel la séparation mécanique (66) et/ou la séparation chimique (76) présentent une séparation de fibres synthétiques en tant que fibres non cellulosiques ;
dans lequel la génération (94) des corps moulés (102) a lieu sur la base des fibres cellulosiques au moyen du procédé lyocell ou au moyen du procédé à la viscose.

9. Procédé selon l'une quelconque des revendications 1 à 8, **caractérisé en ce que** la génération (94) des corps moulés présente :
la dissolution (96) des fibres cellulosiques dans un solvant (116) et le transfert des fibres cellulosiques dissoutes dans une masse à filer ;
l'extrusion (97) de la masse à filer par des filières puis la précipitation (98) dans un bain de filage (191).

10. Procédé selon la revendication 9 présentant au moins une des caractéristiques suivantes :
dans lequel la dissolution (96) des fibres cellulosiques a lieu au moyen d'un procédé de dissolution directe et/ou au moyen d'amines oxydes tertiaires, en particulier de N-oxyde de N-méthylmorpholine, en tant que solvant ;
dans lequel la précipitation (98) dans un bain de filage (191) est entraînée par un milieu aqueux, en particulier présentant une humidité de l'air et/ou un bain d'eau, par ailleurs en particulier sensiblement constitué d'eau ou d'un mélange composé d'eau et de solvant (116).

11. Procédé selon l'une quelconque des revendications 1 à 10, **caractérisé en ce que** le procédé présente un blanchiment (86) des fibres cellulosiques séparées chimiquement.

12. Procédé selon la revendication 11, **caractérisé en ce que** le blanchiment (86) présente au moins un blanchiment issu du groupe qui est constitué d'un blanchiment par oxydation, d'un blanchiment réducteur et d'un blanchiment enzymatique.

13. Procédé selon la revendication 11 ou 12, **caractérisé en ce que** le blanchiment (86) présente :
la mise en oeuvre (88) d'un lavage acide ;
en particulier ensuite la mise en oeuvre (90) d'un blanchiment à l'ozone ; et
en particulier ensuite la mise en oeuvre (92) d'un blanchiment au peroxyde.

14. Procédé selon l'une quelconque des revendications 1 à 13, **caractérisé en ce que** le procédé présente après la séparation (58) d'au moins une partie des constituants non fibreux :
la fragmentation ultérieure (60) des constituants non fibreux séparés ;
la récupération (62) de résidus fibreux provenant des constituants non fibreux fragmentés ultérieurement ; et
l'amenée (63) des résidus fibreux récupérés aux constituants fibreux et/ou pour la séparation mécanique (66) .

15. Procédé selon l'une quelconque des revendications 1 à 14, présentant au moins une des caractéristiques suivantes :
dans lequel le procédé présente avant la séparation mécanique (66) une séparation (64) des constituants fibreux en des fibres individuelles, en particulier au moyen d'un déchirement et/ou d'une mouture ;
dans lequel le procédé présente un usinage ultérieur (99) des corps moulés (102) précipités ;
dans lequel dans le procédé au maximum une partie des fibres non cellulosiques, en particulier au maximum une partie du polyester et/ou au maximum une partie d'élasthanne, issue du matériau textile sont utilisées conjointement pour fabriquer les corps moulés (102) ;
dans lequel un matériau textile non homogène, en particulier un tissu textile mélangé, est utilisé en tant que matériau textile ;
dans lequel le matériau textile présente des restes issus d'une confection de vêtements et/ou en particulier de vieux vêtements portés par un consommateur ou en est constitué ;
dans lequel un corps moulé (102) est une fibre, un film, une éponge, une bille ou une perle ;
dans lequel le procédé présente un traitement ultérieur des corps moulés (102) en un produit, en particulier en une structure textile plane.
